Europäisches Patentamt

(19) European Patent Office

Office européen des brevets

(11) Publication number: **0 278 180 B1**

# EUROPEAN PATENT SPECIFICATION

(45) Date of publication of patent specification: **20.05.92** (51) Int. Cl.⁵: **B22F 3/04**, B30B 15/02

(21) Application number: **87311464.9**

(22) Date of filing: **24.12.87**

(54) **Plastic foam containers for the densification of powder material.**

(30) Priority: **09.02.87 US 12789**

(43) Date of publication of application:
**17.08.88 Bulletin 88/33**

(45) Publication of the grant of the patent:
**20.05.92 Bulletin 92/21**

(84) Designated Contracting States:
**BE CH DE FR GB IT LI NL SE**

(56) References cited:
**GB-A- 1 186 530**
**GB-A- 1 290 660**
**US-A- 3 741 755**

(73) Proprietor: **THE DOW CHEMICAL COMPANY**
**2030 Dow Center Abbott Road P.O. Box 1967**
**Midland Michigan 48640-1967(US)**

(72) Inventor: **Rozmus, Walter J., Jr.**
**4635 Manorwood**
**Traverse City Michigan 49684(US)**

(74) Representative: **Burford, Anthony Frederick et al**
**W.H. Beck, Greener & Co. 7 Stone Buildings Lincoln's Inn**
**London WC2A 3SZ(GB)**

Rank Xerox (UK) Business Services
(3.08/2.19/2.0)

## Description

The subject invention relates to methods and assemblies for consolidating preformed bodies from powder material to form a predetermined densified compact.

It is well known in the art to place powder in a container, place the container in a pressure transmitting medium and apply pressure thereto to form a densified compact of less than full density, known as a green part. The prior art includes methods using elastomeric containers. After compaction has been completed, the pressure is removed and the container expands to its initial size and shape. This expansion has a tendency to crack or tear the surface of the newly formed green part. Binders are used to prevent such surface tearing of the green part but are not totally effective.

According to a first aspect, the present invention provides a method for compacting a powder material to form a densified compact of a predetermined density, said method comprising disposing a sealed container, containing said powder material, in direct contact with a pressure transmitting medium that encapsulates said container, the container preventing contact between the medium and the powder material; and applying pressure to the medium whereby omnidirectional hydraulic pressure is transmitted to and through the container, causing a predetermined densification of said powder material, characterised in that said container has a permanently deformable, impermeable cellular structure, that collapses in response to the pressure exerted upon the medium and remains substantially collapsed after the hydrostatic pressure of the medium is discontinued.

According to a second aspect, the present invention provides an assembly for compacting a powder material to form a densified compact of a predetermined density, said assembly comprising: a container for said powder material; a reservoir for a pressure transmitting medium and adapted to receive said container such that it is encapsulated by said medium whereby, when external pressure is applied to said medium, omni-directional pressure is transmitted to and through said container thereby densifying powder material contained therein to form the densified compact; and a pressure applicator for applying pressure to said medium, characterised in that said container has a permanently deformable impermeable cellular structure that is collapsible and permanently deformable in response to the pressure of said medium and remains substantially collapsed after said pressure is discontinued, such container preventing contact between said medium (16) and said powder material during such collapse.

A key element of the present invention is to provide a container that is collapsible and will not completely expand to its initial shape upon removal of the pressure, eliminating cracking or tearing of the densified compact surface that is typical of the prior art. Since the container does not significantly expand after being compacted, the need for binders is eliminated. Also, the container may be placed in a pressure transmitting medium capable of fluidic flow and the container will prevent contact of the medium with the powder material or green part.

Other advantages of the present invention will be readily appreciated by reference to the following detailed description and accompanying drawings.

Figure 1 is a cross-sectional view of a container of the subject invention containing powder material.

Figure 2 is a cross-sectional view showing the container of Figure 1 placed within a pressure transmitting medium.

Figure 3 is a cross-sectional view of reduced scale illustrating the container and pressure transmitting medium after full densification to a predetermined degree.

Referring the drawings, an assembly for compacting powder metals, nonmetals, and combinations thereof to form a densified compact 14' of a predetermined density is generally shown at 10.

The assembly 10 includes a container generally indicated at 12 in which a quantity of such powder material 14 which is less dense than a predetermined density is disposed. Generally, the powder is particulate and free flowing. The assembly includes a pressure transmitting medium 16 in which the container 12 is placed and disposed. The assembly further includes pressure application means 24, 26 for encapsulating the medium 16 wherein means 24 is capable of applying external pressure to the medium 16. The external pressure applied to the exterior of the medium 16, by hydrostatic pressure, causes omni-directional pressure transmission to the container 12.

The assembly is characterized by the container 12 having a permanently deformable, impervious, cellular structure that allows the container 12 to collapse in response to the hydrostatic pressure of the medium 16 while preventing contact between the medium 16 and the powder material 14. The container structure is such that it remains collapsed after the hydrostatic pressure of the medium 16 is discontinued. The container structure may rebound very slightly but not enough to exert injurious forces on the compacted green part.

More specifically, the cellular structure of the container 12 allows the container 12 to collapse 12' along with the compaction of the metal material 14. The container 12 collapses in response to hydrostatic pressure applied by the medium 16. Also, the collapsed container 12′ does not substantially re-expand when the pressure is removed. That is, as the container 12 is collapsing, it builds no internal forces tending to cause the container 12 to expand to its initial size and shape. Because the container 12 builds not internal forces causing it to re-expand, the compacted powder 14′ is saved from resilient forces of the container 12′ tending to rebound the container 12′ to its initial size and shape. Since the container 12 compacts and does not re-expand after the pressure has been removed, it has a final self sustaining density greater than its initial density. Initially, the cellular structure of the container 12 includes many empty air-filled gaps, closed pores or cells. Upon compaction of the container 12, the structure collapses and the air-filled gaps or cells are reduced in size thus increasing the density of the container. The collapsed container 12′ has no internal forces therein generated by compaction that would cause it to re-expand to its original shape. Release of pressure will not result in re-expansion of the container wherein container surfaces pull away from the green part. thus, the method and container assembly of the invention will not tear or crack the surface of the compacted powder 14′, eliminating the need for binders designed to resist such stresses. The collapsed container 12′ is subsequently removed from the compacted powder green part 14′ by placing it in a rapid omni-directional cycle mold where full densification takes place. In other words, in the preferred mode of the subject invention, loose powder is compacted to less than full or desired density, i.e., to form a green part. The green part, contained in the container assembly of the invention, is thereafter placed in another cycle for full densification.

The container assembly 12 is impermeable i.e. impervious to fluid flow therethrough. The container 12 also has a cellular structure. The cellular or closed pore structure provides for effective pressure transmission between the medium 16 and the material 14 being compacted since there is little resistance to pressure transmission by the walls of the container 12. The cellular structure may be defined by interconnected closed pores or cells. Since the closed cells are interconnected, the container, therefore, does not allow fluid to flow therethrough. One type of material which may be used to form a container 12 in accordance with the present invention is a plastic foam, in particular, cellular foam. Cellular material sold under the registered Trademark STYROFOAM (The Dow Chemical Company) has the properties of being cellular and yet fluid impervious. Such material does not expand after the pressure has been removed.

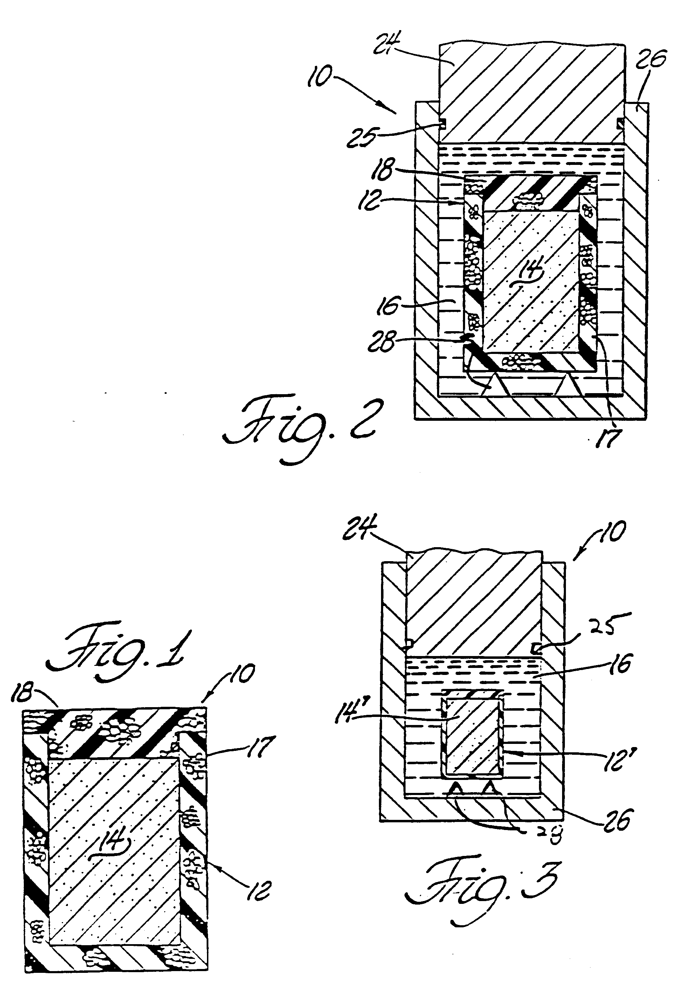

Referring to Figure 1, the container 12 may be a multipart container that is adhesively secured together to define an impermeable seal. In one embodiment, the container 12 includes a base 17 and a cover 18. The cover 18 is sealed on the base 17 prior to placing the container 12 in the pressure transmitting medium 16. Since the container 12 is preferably made of plastic foam, it can be cut, formed, or cast in any desired shape. Since the plastic foam is sufficiently rigid to retain its shape, many green part shapes may be contained and compacted.

The pressure transmitting medium 16 comprises liquid that transmits pressure omni-directionally to the container 12. A pressure transmitting liquid which may be used in accordance with the present invention is water. Alternatively, liquid glass or a composite glass material, as disclosed in U.S. patent 4,428,906 may be used.

The pressure application means comprises a ram 24 and a pot die 26 of a press. The ram 24 is disposed in the pot die 26. The ram 24 contains a seal 25 disposed on the periphery thereof for preventing the pressure transmitting medium 16 from flowing out of the pot die 26 between the ram 24 and the pot die 26. The lower pot die 26 receives the container 12. The container 12 is suspended in the pot die 26 by a plurality of legs 28 to hold the container 12 in place. The ram 24 applies pressure to the pressure transmitting medium 16. Since the medium 16 and container 12 are restrained in the die 26, pressure is uniformly transferred to the container 12. The pressure transmission takes place omni-directionally, i.e. pressure is transferred equally to the container 12 at all points in a direction perpendicular to the surface of the container 12 at each point.

The instant invention therefore provides a method for compacting powder metals, nonmetals, and combinations thereof to form a densified compact 14′ of a predetermined density. A quantity of such powder material 14 which is less dense than the predetermined density is disposed in a sealed container 12. The container 12 is then disposed in a pressure transmitting medium 16. A predetermined densification of the material is caused by applying hydrostatic pressure to the medium 16 to cause omni-directional pressure transmission to the container 12.

The method is characterized by utilizing a collapsible container 12 having a permanently deformable ,impermeable cellular structure. The container 12 is preferably a multipart container adhesively secured together. The method is further characterized by collapsing the cellular container structure in response to hydrostatic pressure exerted by the medium 16. The container prevents contact between the medium 16 and material 14.

The container structure remains collapsed after the hydrostatic pressure of the medium 16 is discontinued.

More specifically, the container 12 used in the process is impermeable, cellular and permanently deformable. That is the container 12 has a structure that is defined by interconnected closed pores, voids, gaps or open cells. Because the container 12 is cellular, pressure is transmitted to the powder 14 with minimal loss through the container walls. Also, because the cellular structure is interconnected, fluid cannot flow through the container 12, preventing contact between the medium 16 and the power material 14.

In operation, powder metal, non-metal, or a combination thereof 14 is poured into a container 12 having a permanently deformable cellular structure and vibrated to even density. The container 12 is then sealed to prevent contact of the material 14 and the medium 16. The pressure transmitting medium 16 is disposed in a pot die 26. The container 12 is suspended in the pressure transmitting medium 16 on a plurality of legs 28. A ram 24 is then inserted in a pot die 26 in close connection with the walls of the pot die 26. Pressure is then applied to the medium 16 by the ram 24. Since the container 12 and medium 16 are restrained by the pot die 26, hydrostatic pressure is transmitted to the container 12 and the powder 14. The container 12 and the powder 14 compact so that the final and self sustaining density of the powder compact 14' and container 12' are greater than their respective initial densities. The pressure transmitting medium 16 is then removed from the collapsed container 12'. The collapsed container 12' does not expand to the initial size because, during compaction, the container 12 builds not internal forces causing it to re-expand. Thus the surface of the compact 14' is not torn or cracked by re-expansion of the collapsed container 12'. The compact 14' is then transferred to a rapid omni-directional cycle die, where full densification of the compact 14' takes place. The collapsed container structure may be removed from the compact part by a solvent, sand blasting, or the like.

**Claims**

1. A method for compacting a powder material (14) to form a densified compact (14') of a predetermined density, said method comprising disposing a sealed container (12), containing said powder material (14), in direct contact with a pressure transmitting medium (16) that encapsulates said container (12), the container (12) preventing contact between the medium (16) and the powder material (14); and applying pressure to the medium (16) whereby omni-directional hydraulic pressure is transmitted to and through the container (12), causing a predetermined densification of said powder material (14), characterised in that said container (12) has a permanently deformable, impermeable cellular structure, that collapses in response to the pressure exerted upon the medium and remains substantially collapsed after the hydrostatic pressure of the medium (16) is discontinued.

2. A method as claimed in Claim 1, wherein the container comprises cellular foam.

3. A method as claimed in Claim 1 or Claim 2, wherein the container is a multipart container (12) adhesively secured together to define an impermeable seal.

4. A method as claimed in any one of the preceding claims, wherein the pressure transmitting medium comprises a fluid or fluidizable medium.

5. A method as claimed in any one of the preceding claims, wherein the container is placed into a pot die (26) containing the pressure transmitting medium (16) and a ram (24) is inserted into the pot die (26) to compress the medium (16) to apply a predetermined omni-directional hydraulic force to the container (12) and powder material (14) while restrained in the pot die (26) wherein said powder material is densified.

6. An assembly for compacting a powder material to form a densified compact (14') of a predetermined density, said assembly comprising: a container (12) for said powder material (14); a reservoir (26) for a pressure transmitting medium (16) and adapted to receive said container (12) such that it is encapsulated by said medium whereby, when external pressure is applied to said medium (16), omni-directional pressure is transmitted to and through said container thereby densifying powder material contained therein to form the densified compact; and a pressure applicator (24) for applying pressure to said medium, characterised in that said container (12) has a permanently deformable impermeable cellular structure that is collapsible and permanently deformable in response to the pressure of said medium (16) and remains substantially collapsed after said pressure is discontinued, such container preventing contact between said medium (16) and said powder material (14) during such collapse.

## Revendications

1. Procédé permettant de compacter un matériau pulvérulent (14) en vue de former un compact densifié (14') de densité déterminée à l'avance, ce procédé consistant à disposer un récipient (12), hermétiquement clos et contenant ledit matériau pulvérulent (14), en contact direct avec un milieu transmettant la pression (16) qui enveloppe entièrement le récipient (12), ce dernier empêchant un contact entre ledit milieu (16) et le matériau pulvérulent (14), et à appliquer une pression sur ledit milieu (16) de façon telle qu'une pression hydraulique omnidirectionnelle soit transmise au récipient (12) et à travers ce dernier, provoquant ainsi une densification, déterminée à l'avance, du matériau pulvérulent (14), caractérisé en ce que le récipient (12) possède une structure alvéolaire, imperméable et déformable d'une manière permanente, qui s'affaisse sous l'effet de la pression exercée sur le milieu et demeure pratiquement affaissée une fois que la pression hydrostatique du milieu (16) cesse de s'exercer.

2. Procédé suivant la revendication 1, selon lequel le récipient comprend une mousse alvéolaire.

3. Procédé suivant la revendication 1 ou la revendication 2, selon lequel le récipient est un récipient (12) en plusieurs parties réunies entre elles par une substance adhésive de façon à former un joint imperméable.

4. Procédé suivant l'une quelconque des revendications précédentes, selon lequel le milieu de transmission de pression est constitué d'un fluide ou d'un milieu pouvant être rendu fluide.

5. Procédé suivant l'une quelconque des revendications précédentes, selon lequel on place le récipient dans un creuset-matrice (26) contenant le milieu transmettant la pression (16) et on introduit un coulisseau (24) dans ce creuset-matrice (26) de façon à comprimer le milieu (16) en vue d'appliquer une force hydraulique omnidirectionnelle, déterminée à l'avance, au récipient (12) et au matériau pulvérulent (14) alors que ces derniers sont enfermés dans le creuset-matrice (26), de sorte que le matériau pulvérulent se trouve densifié.

6. Dispositif permettant de compacter un matériau pulvérulent en vue de former un compact densifié (14') de densité déterminée à l'avance, ce dispositif comprenant un récipient (12), destiné audit matériau pulvérulent (14), un réservoir (26), destiné à un milieu transmettant la pression (16) et agencé de façon à recevoir le récipient (12) de manière qu'il soit enveloppé entièrement par ledit milieu, de sorte que, lorsqu'une pression extérieure est appliquée sur ce milieu (16), une pression omnidirectionnelle est transmise au récipient et à travers celui-ci, en densifiant ainsi le matériau pulvérulent contenu dans ce dernier de façon à former le comprimé densifié, et un applicateur de pression (24) permettant d'appliquer une pression sur ledit milieu, caractérisé en ce que le récipient (12) possède une structure alvéolaire, imperméable et déformable d'une manière permanente, qui est conçue de façon à pouvoir s'affaisser et est déformable d'une manière permanente sous l'effet de la pression dudit milieu (16) et qui demeure pratiquement affaissée une fois que la pression cesse d'être appliquée, ce récipient empêchant un contact entre ledit milieu (16) et le matériau pulvérulent (14) au cours d'un tel affaissement.

## Patentansprüche

1. Verfahren zum Kompaktieren eines Pulvermaterials (14) zur Bildung eines verdichteten Preßlings (14') von vorbestimmter Dichte, wobei das Verfahren das Bereitstellen eines abgedichteten Behälters (12), der das Pulvermaterial (14) enthält, in direktem Kontakt mit einem druckübertragenden Medium (16), das den Behälter (12) einschließt und wobei der Behälter (12) Kontakt zwischen dem Medium (16) und dem Pulvermaterial (14) verhindert, und das Anlegen von Druck auf das Medium (16) umfaßt, wobei von allen Seiten hydraulischer Druck auf und durch den Behälter (12) übertragen wird, was eine vorbestimmte Verdichtung des Pulvermaterials (14) bewirkt, **dadurch gekennzeichnet,** daß der Behälter (12) eine dauerhaft verformbare, undurchlässige zellige Struktur aufweist, die in Reaktion auf den auf das Medium ausgeübten Druck zusammenfällt und nach dem Aussetzen des hydrostatischen Drucks des Mediums (16) im wesentlichen zusammengefallen bleibt.

2. Verfahren nach Anspruch 1, worin der Behälter zelligen Schaum enthält.

3. Verfahren nach Anspruch 1 oder 2, worin der Behälter ein mehrteiliger Behälter (12) ist, der haftend zusammengehalten wird, um eine undurchlässige Abdichtung zu definieren.

4. Verfahren nach einem der vorhergehenden Ansprüche, worin das druckübertragende Medium ein fluides oder fluidisierbares Medium umfaßt.

5. Verfahren nach einem der vorhergehenden Ansprüche, worin der Behälter in eine Gefäßform (26) gegeben wird, die das druckübertragende Medium (16) enthält, und ein Kolben (24) in die Gefäßform (26) eingeführt wird, um das Medium (16) zusammenzupressen, um eine vorbestimmte hydraulische Kraft von allen Seiten auf den Behälter (12) und das Pulvermaterial (14) anzulegen, während diese in der Gefäßform (26) gehalten werden, wobei das Pulvermaterial verdichtet wird.

6. Anordnung zum Kompaktieren eines Pulvermaterials zur Bildung eines verdichteten Preßlings (14') von vorbestimmter Dichte, wobei die Anordnung umfaßt: einen Behälter (12) für das Pulvermaterial (14), ein Reservoir (26) für ein druckübertragendes Medium (16), das zur Aufnahme des Behälters (12) vorgesehen ist, so daß dieser vom Medium eingeschlossen ist, wodurch bei Anlegen von äußerem Druck auf das Medium (16) von allen Seiten Druck auf und durch den Behälter übertragen wird, so daß darin enthaltenes Pulvermaterial zur Bildung des verdichteten Preßlings verdichtet wird, und eine Druckanlegevorrichtung (24) zum Anlegen von Druck auf das Medium, **dadurch gekennzeichnet,** daß der Behälter (12) eine dauerhaft verformbare, undurchlässige zellige Struktur aufweist, die in Reaktion auf den auf das Medium (16) ausgeübten Druck zusammenfallen kann und dauerhaft verformbar ist und nach dem Aussetzen des Drucks im wesentlichen zusammengefallen bleibt, wobei ein solcher Behälter Kontakt zwischen dem Medium (16) und dem Pulvermaterial (14) während eines derartigen Zusammenfallens verhindert.

*Fig. 2*

*Fig. 1*

*Fig. 3*

7